# EUROPEAN PATENT SPECIFICATION

(11) **EP 4 168 143 B1**
(45) Date of publication and mention of the grant of the patent: **18.09.2024**
(21) Application number: 20941444.0
(22) Date of filing: 18.12.2020
(51) Int. Cl.: A63F 13/245, B62D 1/10, A63F 13/98

(54) **MULTI-PIECE STEERING WHEEL ASSEMBLY INCORPORATING AN EXCHANGEABLE SPOKED STEERING WHEEL**
MEHRTEILIGE LENKRADANORDNUNG MIT EINEM AUSTAUSCHBAREN SPEICHENLENKRAD
ENSEMBLE VOLANT À PIÈCES MULTIPLES DOTÉ DE VOLANT À RAYONS ÉCHANGEABLE

(30) Priority: 19.06.2020 US 202063041384 P
(43) Date of publication of application: 26.04.2023
(73) Proprietor: Papis, Massimiliano, Charlotte, NC 28117 (US)
(72) Inventor: Papis, Massimiliano, Charlotte, NC 28117 (US)
(74) Representative: Sach, Greg Robert
(86) International application number: PCT/US2020/066051
(87) International publication number: WO 2021/257113

(56) References cited:
- US-A- 4 887 484
- US-A- 4 887 484
- US-A- 5 924 199
- US-A1- 2004 104 825
- US-A1- 2004 173 047
- US-A1- 2004 173 047
- US-A1- 2005 255 918
- US-A1- 2012 270 663
- US-B1- 7 775 884
- US-B2- 6 544 124
- US-B2- 6 933 861
- US-B2- 7 753 787
- US-B2- 8 672 758

## Description

### Technical Field and Background of the Disclosure

The present disclosure relates broadly and generally to a multi-piece steering wheel assembly incorporating an exchangeable spoked steering wheel and a universal spoked hub adapter. The present steering wheel assembly is applicable for use in motor vehicles, electronic gaming devices, and simulators. In exemplary embodiments, the present assembly enables ready and convenient exchange of steering wheel designs to suit a particular racecar (or type of racing) or racing simulation including, for example, formula racing, sports car racing, stock car racing, drag racing, rallying, off-road racing, touring car racing, production car racing, and others. In vehicle simulators, the exemplary assembly may be incorporated in certain commercially available gaming devices or systems such as the Logitech^{®} G923 Driving Force racing wheel manufactured and sold by Logitech Europe S.A. of Switzerland. Details of such exemplary gaming devices and systems are included United States Published Application No. US2003/0067111 and United States Patent No. 8,088,005. The complete disclosures of these prior art references are incorporated herein by reference. Exemplary embodiments of the present assembly may be incorporated into different land vehicles or watercraft, or used entirely for entertainment purposes in electronic gaming devices, or used in virtual simulation training or other applications.

Further patent documents related to the subject-matter of the present invention are US2012/0270663, US2004/0173047, US4887484, US2004/0104825, or US7775884.

### Summary of Exemplary Embodiments

The present invention relates to a multi-piece spoked steering wheel assembly and an electronic gaming device for vehicle racing simulation as defined in the appended claims, namely in respective independent claims 1 and 11.

Various exemplary embodiments of the present disclosure are described below. Use of the term "exemplary" means illustrative or by way of example only, and any reference herein to "the invention" is not intended to restrict or limit the invention to exact features or steps of any one or more of the exemplary embodiments disclosed in the present specification. References to "exemplary embodiment," "one embodiment," "an embodiment," "various embodiments," and the like, may indicate that the embodiment(s) of the invention so described may include a particular feature, structure, or characteristic, but not every embodiment necessarily includes the particular feature, structure, or characteristic. Further, repeated use of the phrase "in one embodiment," or "in an exemplary embodiment," do not necessarily refer to the same embodiment, although they may.

It is also noted that terms like "preferably", "commonly", and "typically" are not utilized herein to limit the scope of the claimed invention or to imply that certain features are critical, essential, or even important to the structure or function of the claimed invention. Rather, these terms are merely intended to highlight alternative or additional features that may or may not be utilized in a particular embodiment of the present invention.

According to one exemplary embodiment, the present disclosure comprises a multi-piece spoked steering wheel assembly. The exemplary steering wheel assembly incorporates a spoked universal hub adapter and an exchangeable spoked steering wheel. The hub adapter is configured to attach (directly or indirectly) to a central steering column, and includes a center plate and a plurality of spaced apart hub spokes. Each hub spoke has a proximal end integrally formed with the center plate and a distal end extending outwardly from the center plate. The exchangeable steering wheel includes an outer rim and a plurality of spaced interior wheel spokes. Each wheel spoke has a proximal end integrally formed with the outer rim and a distal end extending inwardly from the outer rim and in a direction of the spoked hub adapter. The distal ends of the hub spokes operatively align with distal ends of the wheel spokes. A plurality of fasteners removably attach together the aligned distal ends of the hub spokes and the wheel spokes, thereby interconnecting the spoked hub adapter and the steering wheel in the multi-piece spoked steering wheel assembly. Exemplary fasteners may comprise threaded bolts, screws, rivets, studs, clamps, clips, latches, pins, sockets, nuts, washers, nails, friction-fitting parts, complementary male and female parts, and others .

As used herein, the term "steering column" refers broadly and generally to the part, device or assembly of the vehicle, electronic gaming device or simulator intended primarily for operatively connecting (or mounting) the steering wheel to the vehicle or device. In the case of vehicles, such as automobiles, ATVs, golf carts, watercraft, farming and construction equipment and others, the steering column may incorporate a steering shaft, outer housing, universal joints and couplings and other such parts. In the case of electronic gaming devices and simulators, the steering column may comprise any wheel-mounting part, area or structure on or within the device, and may function in response to movement of the steering wheel using electronic components, sensors, firmware and software. In one example, the steering column incorporates a hall-effect steering sensor which uses magnetic fields to sense the position of the wheel.

The term "integrally formed" means one or more components assembled together as an integrated unit, wherein the assembled components are not intended for disassembly by an end user. For example, the welding of one metal part to another is considered an integrally formed assembly.

According to another exemplary embodiment, the plurality of wheel spokes includes first and second opposing wheel spokes located in respective 3 o'clock and 9 o'clock positions relative to the outer rim.

According to another exemplary embodiment, each of the first and second wheel spokes has an inwardly-pointed controller surround configured to border a portion of a game controller located adjacent the steering column.

According to another exemplary embodiment, the plurality of hub spokes includes first and second opposing hub spokes extending outwardly towards respective 9 o'clock and 3 o'clock positions on the outer rim of the steering wheel.

According to another exemplary embodiment, the plurality of hub spokes further includes a third hub spoke extending downwardly towards a 6 o'clock position on the outer rim of the steering wheel.

According to another exemplary embodiment, the third hub spoke defines a game button cutout.

According to another exemplary embodiment, each of the plurality of wheel spokes has an elongated thin planar (flat) structure.

According to another exemplary embodiment, each of the plurality of hub spokes has an elongated thin planar (flat) structure.

According to another exemplary embodiment, each of the plurality of hub spokes is bent at the proximal end formed with the center plate such that the distal end angles in a forward direction relative to the steering column.

According to another exemplary embodiment, each of the plurality of wheel spokes is bent such that the distal end angles inwardly in a direction towards the steering column.

According to another exemplary embodiment, the spoked hub adapter has a generally T-shaped structure with an arcuate top.

According to another exemplary embodiment, the outer rim of the spoked steering wheel is substantially annular.

According to another exemplary embodiment, the outer rim of the spoked steering wheel is substantially oval.

In yet another exemplary embodiment, the present disclosure comprises an electronic gaming device for vehicle racing simulation. The gaming device incorporates a central steering column, a spoked universal hub adapter and an exchangeable spoked steering wheel. The spoked hub adapter is attached (directly or indirectly) to the central steering column, and includes a center plate and a plurality of spaced apart hub spokes. Each hub spoke has a proximal end integrally formed with the center plate and a distal end extending outwardly from the center plate. The exchangeable steering wheel includes an outer rim and a plurality of spaced interior wheel spokes. Each wheel spoke has a proximal end integrally formed with the outer rim and a distal end extending inwardly from the outer rim and in a direction of the spoked hub adapter. Distal ends of the hub spokes operatively align with distal ends of the wheel spokes. A plurality of fasteners removably attach together the aligned distal ends of the hub spokes and the wheel spokes, thereby interconnecting the spoked hub adapter and the steering wheel in the spoked steering wheel assembly.

### Brief Description of the Drawings

Exemplary embodiments of the present disclosure will hereinafter be described in conjunction with the following drawing figures, wherein like numerals denote like elements, and wherein:
Figure 1 is a perspective view of an electronic gaming device incorporating a multi-piece spoked steering wheel assembly according to one exemplar embodiment of the present disclosure;
Figure 2 is an exploded view of the exemplary steering wheel assembly;
Figure 3 is a plan view of the exemplary steering wheel assembly;
Figure 4 is a front perspective view of the exemplary steering wheel assembly;
Figure 5 is a rear perspective view of the exemplary steering wheel assembly;
Figure 6 is a plan view of an exemplary spoked steering wheel incorporated in the present steering wheel assembly;
Figure 7 is a plan view of an exemplary spoked hub adapter incorporated in the present steering wheel assembly;
Figures 8, 9 and 10 are further views of the exemplary spoked hub adapter; and
Figures 11, 12 and 13 are views of the multi-piece spoked steering wheel assembly according to an alternative exemplary embodiment of the present disclosure.

### Description of Exemplary Embodiments and Best Mode

The present invention is described more fully hereinafter with reference to the accompanying drawings, in which one or more exemplary embodiments of the invention are shown. Like numbers used herein refer to like elements throughout. This invention may, however, be embodied in many different forms and should not be construed as limited to the embodiments set forth herein; rather, these embodiments are provided so that this disclosure will be operative, enabling, and complete. Accordingly, the particular arrangements disclosed are meant to be illustrative only and not limiting as to the scope of the invention, which is to be given the full breadth of the appended claims and any and all equivalents thereof. Moreover, many embodiments, such as adaptations, variations, modifications, and equivalent arrangements, will be implicitly disclosed by the embodiments described herein and fall within the scope of the present invention.

Although specific terms are employed herein, they are used in a generic and descriptive sense only and not for purposes of limitation. Unless otherwise expressly defined herein, such terms are intended to be given their broad ordinary and customary meaning not inconsistent with that applicable in the relevant industry and without restriction to any specific embodiment hereinafter described. As used herein, the article "a" is intended to include one or more items. Where only one item is intended, the term "one", "single", or similar language is used. When used herein to join a list of items, the term "or" denotes at least one of the items, but does not exclude a plurality of items of the list.

For exemplary methods or processes of the invention, the sequence and/or arrangement of steps described herein are illustrative and not restrictive. Accordingly, it should be understood that, although steps of various processes or methods may be shown and described as being in a sequence or temporal arrangement, the steps of any such processes or methods are not limited to being carried out in any particular sequence or arrangement, absent an indication otherwise. Indeed, the steps in such processes or methods generally may be carried out in various different sequences and arrangements while still falling within the scope of the present invention.

Additionally, any references to advantages, benefits, unexpected results, or operability of the present invention are not intended as an affirmation that the invention has been previously reduced to practice or that any testing has been performed. Likewise, unless stated otherwise, use of verbs in the past tense (present perfect or preterit) is not intended to indicate or imply that the invention has been previously reduced to practice or that any testing has been performed.

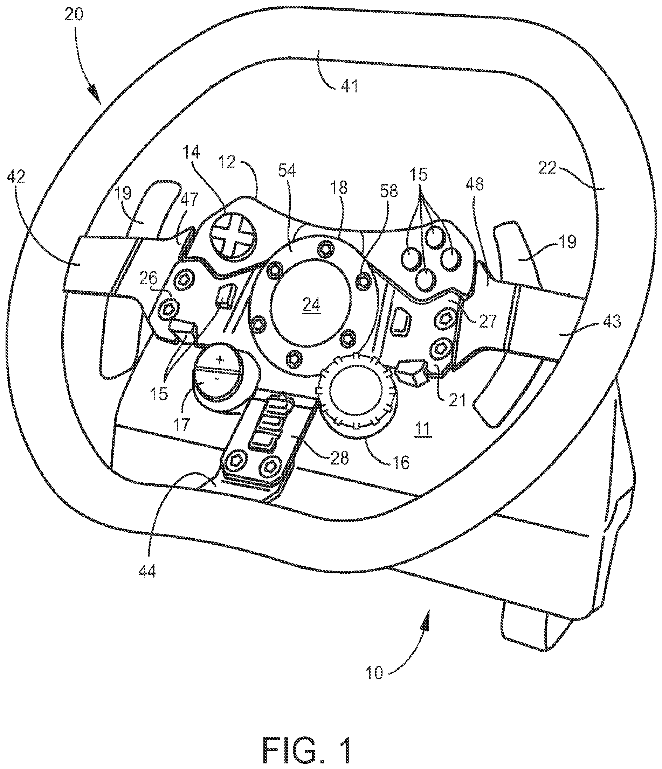

Referring now specifically to the drawings, an electronic gaming device incorporating a two-piece spoked steering wheel assembly according to one embodiment of the present disclosure is illustrated in Figure 1 and shown generally at broad reference numeral 10. The steering wheel assembly is illustrated at broad reference numeral 20. Like related gaming devices of the prior art, the present gaming device 10 comprises a game console 11 that outputs a video signal to a display unit (not shown) to display a racing game or other simulation that a user can play through an integrated game controller 12. The game controller 12 may include a directional pad 14, a variety of different control buttons 15, a multi-point selection dial 16, and +/- buttons 17, and LED indicator lights 18. In exemplary embodiments, the gaming device 10 mounts directly to a table and features a hall-effect steering sensor (not shown), stainless steel paddle shifters 19 and floor pedals (not shown) with anti-backlash. Dual-motor force feedback and other mechanical and electromechanical components are configured to create a realistic immersive racing experience. In other exemplary embodiments, the present spoked wheel assembly 20 may be utilized in racing automobiles, ATVs, golf carts, watercraft, farming and construction equipment and other vehicles.

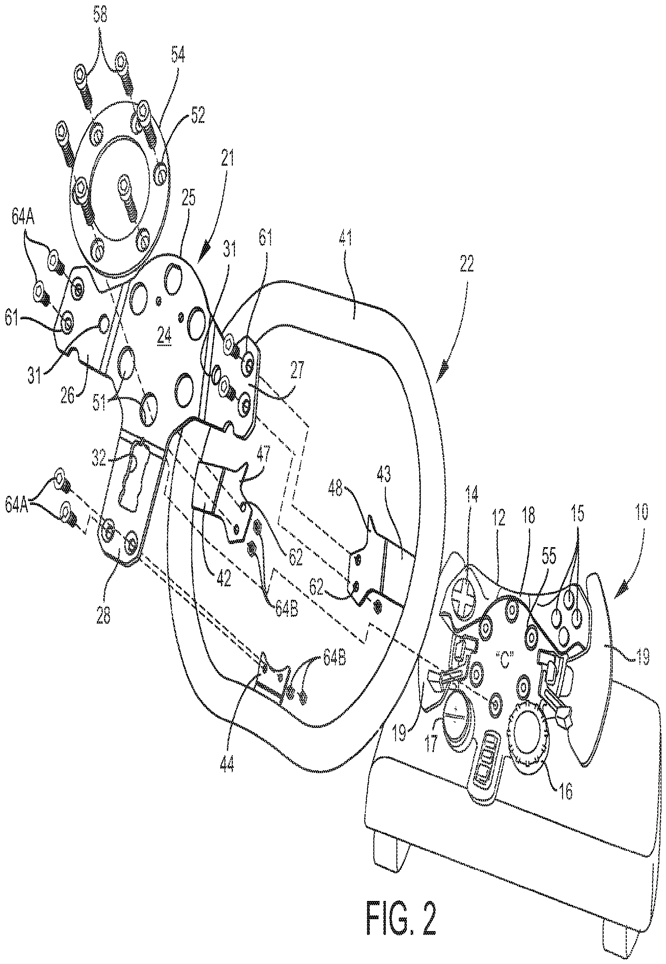

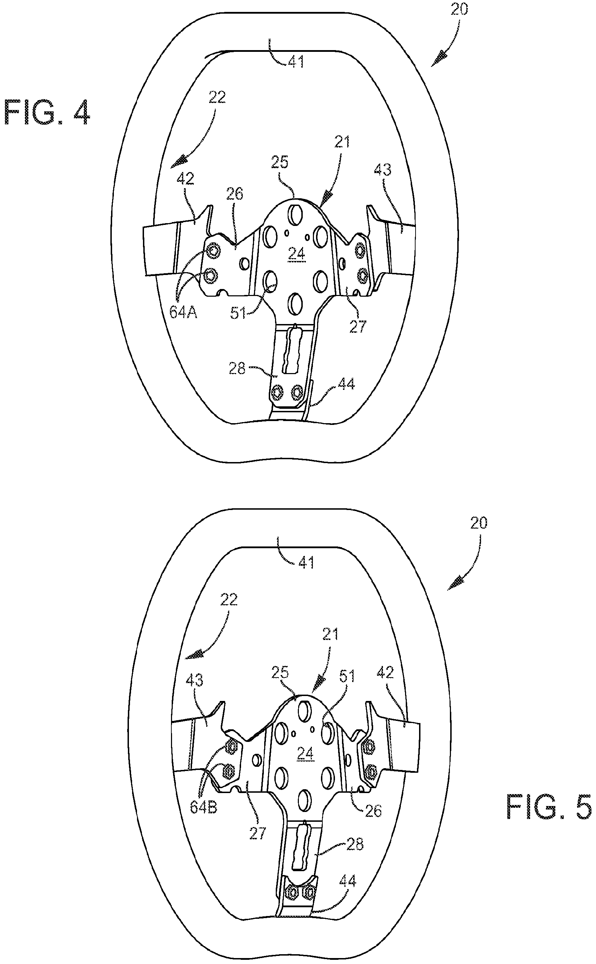

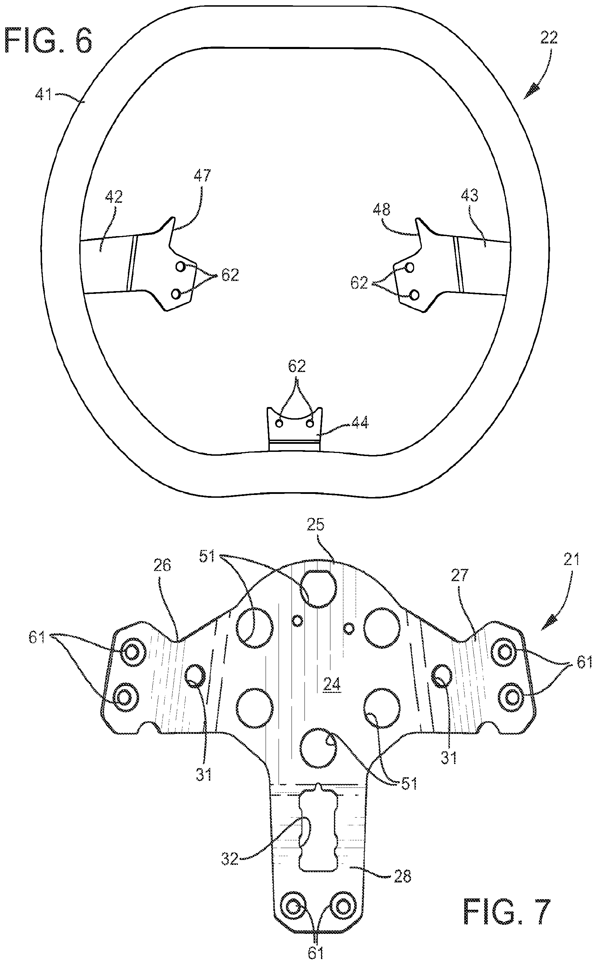

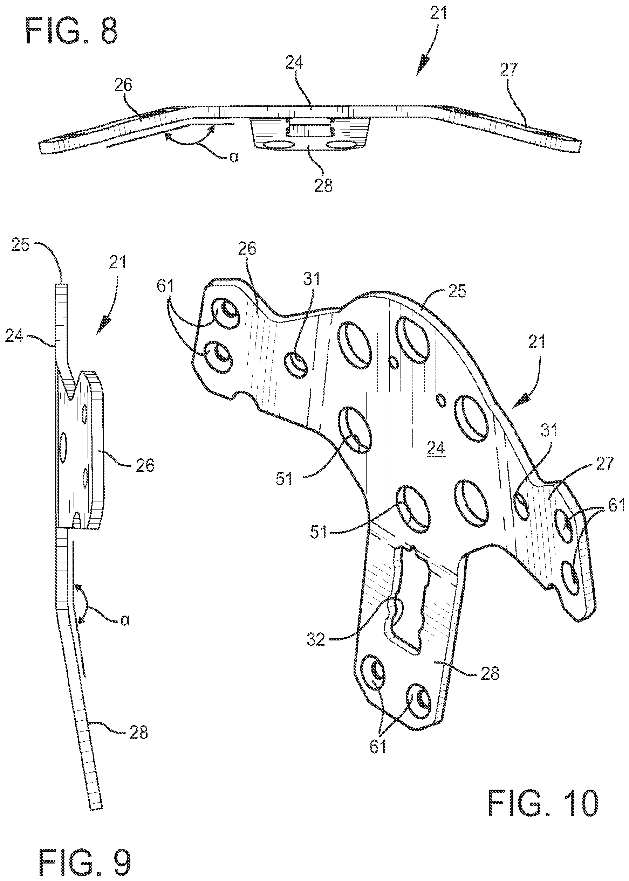

Referring to the embodiment of Figures 1 - 10, the exemplary wheel assembly 20 incorporates a generally T-shaped universal hub adapter 21 and an exchangeable spoked steering wheel 22. The hub adapter 21 is configured to attach directly or indirectly to a central steering column "C" of the gaming device 10 (See Figure 2), and includes a metal center plate 24 forming an arcuate top 25 and a number of spaced apart stainless steel hub spokes 26, 27, 28. As best shown in Figures 8, 9 and10, each spoke 26, 27, 28 of the hub adapter 21 has an elongated thin planar structure with a proximal end integrally formed with the center plate 24 and a distal end extending outwardly from the center plate 24. In the exemplary adapter, the hub spokes 26, 27, 28 are bent at respective proximal ends such that the distal ends angle in a forward direction relative to the steering column "C" of the gaming device 10. The forward angle (α) of each hub spoke 26, 27, 28 may be between 160 - 170 degrees. Shaped cutouts 31, 32 are formed in the spokes 26, 27, 28 to accommodate various control buttons of the gaming device 10.

As best shown in Figures 2, 3, and 6, the exchangeable steering wheel 22 includes an outer rim 41 and a number of spaced apart, stainless steel wheel spokes 42, 43, 44. Each wheel spoke 42, 43, 44 has a proximal end integrally formed (e.g., welded) with the outer rim 41 and a distal end extending inwardly from the outer rim 41 in a direction of the spoked hub adapter 21. Like hub spokes 26, 27, 28, each wheel spoke 42, 43, 44 has an elongated thin planar structure. In the exemplary steering wheel 22, the wheel spokes 42, 43, 44 are located at respective 3-o'clock, 6-o'clock, and 9-o'clock positions on the wheel rim 41. Each wheel spoke 42, 43, 44 is bent at its proximal end such that the distal end operatively matches the angle of an adjacent corresponding hub spoke 26, 27, 28. Additionally, side spokes 42,43 may comprise integrally formed inwardly-pointed controller surrounds 47, 48 configured to border portions of the game controller 12 (See Figure 1) located adjacent the steering column "C" of gaming device 10. The steering wheel rim 41 may be constructed in any industry-recognized design or style in order to suit a particular racecar or type of racing, and may be covered with an ergonomic grip fabricated of leather, suede, vinyl or other suitable material. In the embodiment of Figure 1, the outer rim 41 of the steering wheel 22 is substantially oval and is of a type and style conventionally used in sports car racing.

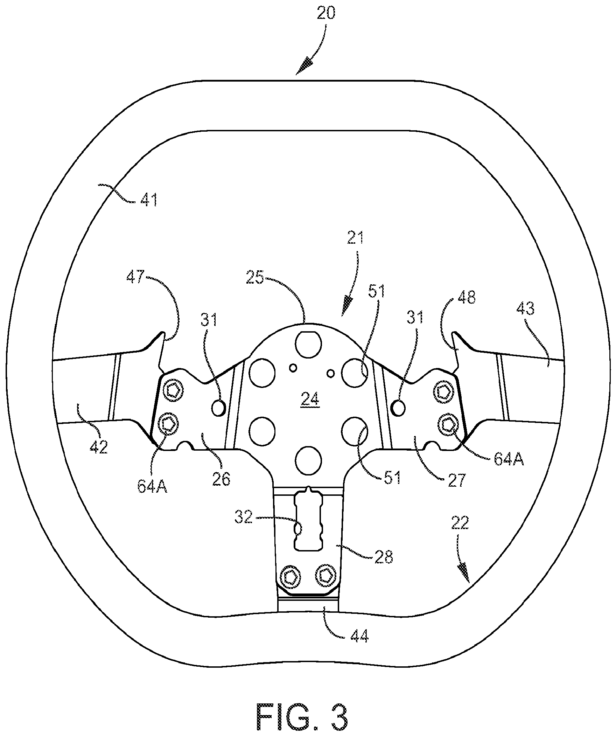

Referring to Figures 1, 2, 6 and 7, the universal hub adapter 21 has a series of preformed annularly-arranged bolt holes 51 formed in its center plate 24. These bolt holes 51 align with corresponding countersunk holes 52 formed in an outer fastener ring 54 and internally-threaded holes 55 located at the steering column "C" of the gaming device 10. Threaded bolts 58 insert through the aligned holes 51, 52 of the center plate 24 and fastener ring 54, and into the internally-threaded holes 55 at the steering column "C" to securely mount the hub adapter 21 to the gaming device 10. With the hub adapter 21 mounted to the gaming device 10 the exchangeable steering wheel 22 is positioned such that distal ends of the hub spokes 26, 27, 28 extend towards respective 3-o'clock, 6-o'clock, and 9-o'clock positions on the wheel rim 41 to align with corresponding distal ends of the wheel spokes 42, 43, 44. Distal ends of the hub and wheel spokes have preformed fastener holes 61, 62 configured to receive respective fasteners 64A, 64B (e.g., threaded bolts and nuts) which securely interconnect the hub adapter 21 and exchangeable steering wheel 22 together in the exemplary two-piece assembly 20. See Figure 3, 4, and 5.

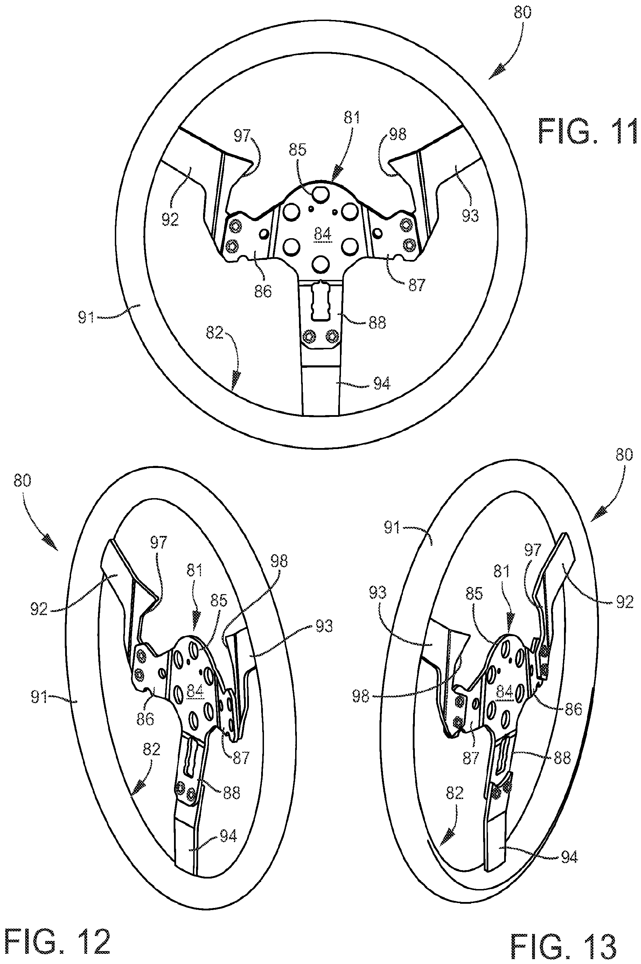

A further exemplary embodiment of the present two-piece spoked steering wheel assembly 80 is illustrated in Figures 11- 13. Like assembly 20 previously described, the steering wheel assembly 80 incorporates a generally T-shaped universal hub adapter 81 and an exchangeable spoked steering wheel 82. The hub adapter 81 is configured to attach to the central steering column "C" of the gaming device 10 shown in Figures 1 and 2, and includes a metal center plate 84 forming an arcuate top 85 and a number of spaced apart stainless steel hub spokes 86, 87, 88. The exemplary hub adapter 81 may be identical to the hub adapter 21 described above - in each of structure, material construction and function.

The exchangeable steering wheel 82 includes an outer rim 91 and a number of spaced apart, stainless steel wheel spokes 92, 93, 94. Each wheel spoke 92, 93, 94 has a proximal end integrally formed (e.g., welded) with the outer rim 91 and a distal end extending inwardly from the outer rim 91 in a direction of the spoked hub adapter 81. The wheel spokes 92, 93, 94 are located at respective 3-o'clock, 6-o'clock, and 9-o'clock positions on the wheel rim 91, as previously described. Each wheel spoke 92, 93, 94 is bent at its proximal end such that the distal end operatively matches the angle of an adjacent corresponding hub spoke 86, 87, 88. Side spokes 92, 93 may comprise integrally formed inwardly-pointed controller surrounds 97, 98 configured to border portions of the game controller 12. In this exemplary embodiment, the outer rim 91 of the exchangeable steering wheel 82 is substantially round and is of a type and style conventionally used in dirt track racing. In yet another exemplary embodiment, the steering wheel of the present assembly may be readily and conveniently exchanged with one of a type and style conventionally used in stockcar racing. In the stockcar steering wheel, the diameter of the round outer rim may reduced and the rearward angle of the wheel spokes slightly increased.

In each of the various embodiments discussed above, the spoked hub adapter comprises a universal component which enables ready and convenient interchanging of different types and styles of steering wheels. The steering wheel can be exchanged in the vehicle or gaming device without requiring multiple tools, or complicated and time-consuming disassembly and reassembly.

For the purposes of describing and defining the present invention it is noted that the use of relative terms, such as "substantially", "generally", "approximately", and the like, are utilized herein to represent an inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

Exemplary embodiments of the present invention are described above. No element, act, or instruction used in this description should be construed as important, necessary, critical, or essential to the invention unless explicitly described as such. Although only a few of the exemplary embodiments have been described in detail herein, those skilled in the art will readily appreciate that many modifications are possible in these exemplary embodiments without materially departing from the teachings and advantages presented in this disclosure.

## Claims

1. A multi-piece spoked steering wheel assembly, comprising:
a spoked hub adapter configured for attachment to a central steering column, and comprising a center plate and a plurality of spaced apart hub spokes, each hub spoke having a proximal end integrally formed with said center plate and a distal end extending outwardly from said center plate;
an exchangeable spoked steering wheel comprising an outer rim and a plurality of spaced interior wheel spokes, each wheel spoke having a proximal end integrally formed with said outer rim and a distal end extending inwardly from said outer rim and in a direction of said spoked hub adapter, such that distal ends of said hub spokes align with distal ends of said wheel spokes, and wherein said plurality of wheel spokes comprises first and second opposing wheel spokes located in respective 3 o'clock and 9 o'clock positions relative to said outer rim, and wherein each of said first and second wheel spokes comprises an inwardly-pointed controller surround configured to border a portion of a game controller located adjacent the steering column; and
a plurality of fasteners removably attaching together the aligned distal ends of said hub spokes and said wheel spokes, thereby interconnecting said spoked hub adapter and said steering wheel in said multi-piece spoked steering wheel assembly.

2. The multi-piece spoked steering wheel assembly according to Claim 1, wherein said plurality of hub spokes further comprises a third hub spoke extending downwardly towards a 6 o'clock position on said outer rim of said steering wheel.

3. The multi-piece spoked steering wheel assembly according to Claim 2, wherein said third hub spoke defines a game button cutout.

4. The multi-piece spoked steering wheel assembly according to Claim 1, wherein each of said plurality of wheel spokes has an elongated planar structure.

5. The multi-piece spoked steering wheel assembly according to Claim 1, wherein each of said plurality of hub spokes has an elongated planar structure.

6. The multi-piece spoked steering wheel assembly according to Claim 1, wherein each of said plurality of hub spokes is bent at the proximal end formed with said center plate such that the distal end angles in a forward direction away from the steering column.

7. The multi-piece spoked steering wheel assembly according to Claim 6, wherein each of said plurality of wheel spokes is bent such that the distal end angles inwardly in a direction towards the steering column.

8. The multi-piece spoked steering wheel assembly according to Claim 1, wherein said spoked hub adapter has a generally T-shaped structure with an arcuate top.

9. The multi-piece spoked steering wheel assembly according to Claim 1, wherein said outer rim of said spoked steering wheel is substantially annular.

10. The multi-piece spoked steering wheel assembly according to Claim 1, wherein said outer rim of said spoked steering wheel is substantially oval.

11. An electronic gaming device for vehicle racing simulation, comprising:
a game controller;
a central steering column adjacent said game controller;
a spoked hub adapter attached to said steering column, and comprising a center plate and a plurality of spaced apart hub spokes, each hub spoke having a proximal end integrally formed with said center plate and a distal end extending outwardly from said center plate;
an exchangeable spoked steering wheel comprising an outer rim and a plurality of spaced interior wheel spokes, each wheel spoke having a proximal end integrally formed with said outer rim and a distal end extending inwardly from said outer rim and in a direction of said spoked hub adapter, such that distal ends of said hub spokes align with distal ends of said wheel spokes, and wherein said plurality of wheel spokes comprises first and second opposing wheel spokes located in respective 3 o'clock and 9 o'clock positions relative to said outer rim, and wherein each of said first and second wheel spokes comprises an inwardly-pointed controller surround bordering a portion of said game controller; and
a plurality of fasteners removably attaching together the aligned distal ends of said hub spokes and said wheel spokes, thereby interconnecting said spoked hub adapter and said spoked steering wheel.

12. The electronic gaming device according to Claim 11, wherein said plurality of hub spokes further comprises a third hub spoke extending downwardly towards a 6 o'clock position on said outer rim of said steering wheel.

13. The electronic gaming device according to Claim 12, wherein each of said plurality of hub spokes is bent at the proximal end formed with said center plate such that the distal end angles in a forward direction away from the steering column.

14. The electronic gaming device according to Claim 13, wherein each of said plurality of wheel spokes is bent such that the distal end angles inwardly in a direction towards the steering column.

## Patentansprüche

1. Mehrteilige Speichenlenkradanordnung, aufweisend:
einen Nabenadapter mit Speichen, der zur Befestigung an einer zentralen Lenksäule ausgebildet ist und eine Mittelplatte und eine Vielzahl von beabstandeten Nabenspeichen aufweist, wobei jede Nabenspeiche ein proximales Ende, das einstückig mit der Mittelplatte ausgebildet ist, und ein distales Ende aufweist, das sich von der Mittelplatte nach außen erstreckt;
ein austauschbares Speichenlenkrad, das einen äußeren Rand und eine Vielzahl von beabstandeten inneren Radspeichen aufweist, wobei jede Radspeiche ein proximales Ende, das einstückig mit dem äußeren Rand ausgebildet ist, und ein distales Ende aufweist, das sich von dem äußeren Rand nach innen und in eine Richtung des Nabenadapters mit Speichen erstreckt, so dass die distalen Enden der Nabenspeichen mit den distalen Enden der Radspeichen ausgerichtet sind, und wobei die Vielzahl von Radspeichen erste und zweite gegenüberliegende Radspeichen aufweist, die in jeweiligen 3-Uhr- und 9-Uhr-Positionen relativ zu dem äußeren Rand angeordnet sind, und wobei jede der ersten und zweiten Radspeichen eine nach innen weisende Controller-Umrandung aufweist, die dazu eingerichtet ist, einen Teil eines Spielcontrollers, die benachbart zu der Lenksäule angeordnet ist, zu begrenzen; und
eine Vielzahl von Befestigungselementen, die die ausgerichteten distalen Enden der Nabenspeichen und der Radspeichen lösbar miteinander verbinden, wodurch der Nabenadapter mit Speichen und das Lenkrad in der mehrteiligen Speichenlenkradanordnung miteinander verbunden werden.

2. Mehrteilige Speichenlenkradanordnung nach Anspruch 1, wobei die Vielzahl von Nabenspeichen ferner eine dritte Nabenspeiche aufweist, die sich nach unten in Richtung einer 6-Uhr-Position auf dem äußeren Rand des Lenkrads erstreckt.

3. Mehrteilige Speichenlenkradanordnung nach Anspruch 2, wobei die dritte Nabenspeiche einen Spielknopfausschnitt definiert.

4. Mehrteilige Speichenlenkradanordnung nach Anspruch 1, wobei jede der Vielzahl von Radspeichen eine längliche planare Struktur aufweist.

5. Mehrteilige Speichenlenkradanordnung nach Anspruch 1, wobei jede der Vielzahl von Nabenspeichen eine längliche planare Struktur aufweist.

6. Mehrteilige Speichenlenkradanordnung nach Anspruch 1, wobei jede der Vielzahl von Nabenspeichen an dem mit der Mittelplatte gebildeten proximalen Ende so gebogen ist, dass das distale Ende in einer Vorwärtsrichtung von der Lenksäule weg abgewinkelt ist.

7. Mehrteilige Speichenlenkradanordnung nach Anspruch 6, wobei jede der Vielzahl von Radspeichen so gebogen ist, dass das distale Ende nach innen in Richtung der Lenksäule abgewinkelt ist.

8. Mehrteilige Speichenlenkradanordnung nach Anspruch 1, wobei der Nabenadapter mit Speichen eine allgemein T-förmige Struktur mit einem bogenförmigen Oberteil aufweist.

9. Mehrteilige Speichenlenkradanordnung nach Anspruch 1, wobei der äußere Rand des Speichenlenkrads im Wesentlichen ringförmig ist.

10. Mehrteilige Speichenlenkradanordnung nach Anspruch 1, wobei der äußere Rand des Speichenlenkrads im Wesentlichen oval ist.

11. Elektronische Spielvorrichtung für die Simulation von Fahrzeugrennen, aufweisend:
einen Spielcontroller;
eine zentrale Lenksäule neben dem Spielcontroller;
einen Nabenadapter mit Speichen, der an der Lenksäule befestigt ist und eine Mittelplatte und eine Vielzahl von beabstandeten Nabenspeichen aufweist, wobei jede Nabenspeiche ein proximales Ende, das einstückig mit der Mittelplatte ausgebildet ist, und ein distales Ende aufweist, das sich von der Mittelplatte nach außen erstreckt;
ein austauschbares Speichenlenkrad, das einen äußeren Rand und eine Vielzahl von beabstandeten inneren Radspeichen aufweist, wobei jede Radspeiche ein proximales Ende, das einstückig mit dem äußeren Rand ausgebildet ist, und ein distales Ende aufweist, das sich von dem äußeren Rand nach innen und in eine Richtung des Nabenadapters mit Speichen erstreckt, so dass die distalen Enden der Nabenspeichen mit den distalen Enden der Radspeichen ausgerichtet sind, und wobei die Vielzahl von Radspeichen erste und zweite gegenüberliegende Radspeichen aufweist, die in jeweiligen 3-Uhr- und 9-Uhr-Positionen relativ zu dem äußeren Rand angeordnet sind, und wobei jede der ersten und zweiten Radspeichen eine nach innen weisende Controller-Umrandung aufweist, die einen Teil des Spielcontrollers begrenzt; und
eine Vielzahl von Befestigungselementen, die die ausgerichteten distalen Enden der Nabenspeichen und der Radspeichen lösbar miteinander verbinden, wodurch der Nabenadapter mit Speichen und das Speichenlenkrad miteinander verbunden werden.

12. Elektronische Spielvorrichtung nach Anspruch 11, wobei die Vielzahl von Nabenspeichen ferner eine dritte Nabenspeiche aufweist, die sich nach unten in Richtung einer 6-Uhr-Position auf dem äußeren Rand des Lenkrads erstreckt.

13. Elektronische Spielvorrichtung nach Anspruch 12, wobei jede der Vielzahl von Nabenspeichen an dem mit der Mittelplatte gebildeten proximalen Ende so gebogen ist, dass das distale Ende in einer Vorwärtsrichtung von der Lenksäule weg abgewinkelt ist.

14. Elektronische Spielvorrichtung nach Anspruch 13, wobei jede der Vielzahl von Radspeichen so gebogen ist, dass das distale Ende nach innen in Richtung der Lenksäule abgewinkelt ist.

## Revendications

1. Ensemble volant à rayons en plusieurs pièces, comprenant :
un adaptateur de moyeu à rayons configuré pour être fixé à une colonne de direction centrale, et comprenant une plaque centrale et une pluralité de rayons de moyeu espacés, chaque rayon de moyeu ayant une extrémité proximale formée d'un seul tenant avec ladite plaque centrale et une extrémité distale s'étendant vers l'extérieur à partir de ladite plaque centrale ;
un volant à rayons interchangeables comprenant une bordure extérieure et une pluralité de rayons de volant intérieurs espacés, chaque rayon de volant ayant une extrémité proximale formée d'un seul tenant avec ladite bordure extérieure et une extrémité distale s'étendant vers l'intérieur à partir de ladite bordure extérieure et en direction dudit adaptateur de moyeu à rayons, de sorte que des extrémités distales desdits rayons de moyeu s'alignent avec des extrémités distales desdits rayons de volant, et dans lequel ladite pluralité de rayons de volant comprend des premier et deuxième rayons de volant opposés situés dans des positions respectives en 3 heures et 9 heures par rapport à ladite bordure extérieure, et dans lequel chacun desdits premier et deuxième rayons de volant comprend un encadrement de contrôleur dirigé vers l'intérieur configuré pour délimiter une partie d'un contrôleur de jeu situé à proximité adjacente de la colonne de direction ; et
une pluralité d'attaches fixant ensemble de manière amovible les extrémités distales alignées desdits rayons de moyeu et desdits rayons de volant, interconnectant ainsi ledit adaptateur de moyeu à rayons et ledit volant dans ledit ensemble volant à rayons en plusieurs pièces.

2. Ensemble volant à rayons en plusieurs pièces selon la revendication 1, dans lequel ladite pluralité de rayons de moyeu comprend en outre un troisième rayon de moyeu s'étendant vers le bas vers une position en 6 heures sur ladite bordure extérieure dudit volant.

3. Ensemble volant à rayons en plusieurs pièces selon la revendication 2, dans lequel ledit troisième rayon de moyeu définit une découpe pour bouton de jeu.

4. Ensemble volant à rayons en plusieurs pièces selon la revendication 1, dans lequel chacun de ladite pluralité de rayons de volant a une structure plane allongée.

5. Ensemble volant à rayons en plusieurs pièces selon la revendication 1, dans lequel chacun de ladite pluralité de rayons de moyeu a une structure plane allongée.

6. Ensemble volant à rayons en plusieurs pièces selon la revendication 1, dans lequel chacun de ladite pluralité de rayons de moyeu est courbé au niveau de l'extrémité proximale formée avec ladite plaque centrale de sorte que l'extrémité distale s'incline dans une direction vers l'avant en s'éloignant de la colonne de direction.

7. Ensemble volant à rayons en plusieurs pièces selon la revendication 6, dans lequel chacun de ladite pluralité de rayons de roue est courbé de telle sorte que l'extrémité distale s'incline vers l'intérieur dans une direction vers la colonne de direction.

8. Ensemble volant à rayons en plusieurs pièces selon la revendication 1, dans lequel ledit adaptateur de moyeu à rayons a une structure généralement en forme de T avec un sommet arqué.

9. Ensemble volant à rayons en plusieurs pièces selon la revendication 1, dans lequel ladite bordure extérieure dudit volant à rayons est sensiblement annulaire.

10. Ensemble volant à rayons en plusieurs pièces selon la revendication 1, dans lequel ladite bordure extérieure dudit volant à rayons est sensiblement ovale.

11. Dispositif de jeu électronique pour simulation de course de véhicules, comprenant :
un contrôleur de jeu ;
une colonne de direction centrale adjacente audit contrôleur de jeu ;
un adaptateur de moyeu à rayons fixé à ladite colonne de direction, et comprenant une plaque centrale et une pluralité de rayons de moyeu espacés, chaque rayon de moyeu ayant une extrémité proximale formée d'un seul tenant avec ladite plaque centrale et une extrémité distale s'étendant vers l'extérieur à partir de ladite plaque centrale ;
un volant à rayons interchangeables comprenant une bordure extérieure et une pluralité de rayons de volant intérieurs espacés, chaque rayon de volant ayant une extrémité proximale formée d'un seul tenant avec ladite bordure extérieure et une extrémité distale s'étendant vers l'intérieur à partir de ladite bordure extérieure et en direction dudit adaptateur de moyeu à rayons, de sorte que des extrémités distales desdits rayons de moyeu s'alignent avec des extrémités distales desdits rayons de volant, et dans lequel ladite pluralité de rayons de volant comprend des premier et deuxième rayons de volant opposés situés dans des positions respectives en 3 heures et 9 heures par rapport à ladite bordure extérieure, et dans lequel chacun desdits premier et deuxième rayons de volant comprend un encadrement de contrôleur dirigé vers l'intérieur délimitant une partie dudit contrôleur de jeu ; et
une pluralité d'attaches fixant ensemble de manière amovible les extrémités distales alignées desdits rayons de moyeu et desdits rayons de volant, interconnectant ainsi ledit adaptateur de moyeu à rayons et ledit volant à rayons.

12. Dispositif de jeu électronique selon la revendication 11, dans lequel ladite pluralité de rayons de moyeu comprend en outre un troisième rayon de moyeu s'étendant vers le bas vers une position en 6 heures sur ladite bordure extérieure dudit volant.

13. Dispositif de jeu électronique selon la revendication 12, dans lequel chacun de ladite pluralité de rayons de moyeu est courbé au niveau de l'extrémité proximale formée avec ladite plaque centrale de telle sorte que l'extrémité distale s'incline dans une direction vers l'avant en s'éloignant de la colonne de direction.

14. Dispositif de jeu électronique selon la revendication 13, dans lequel chacun de ladite pluralité de rayons de volant est courbé de telle sorte que l'extrémité distale s'incline vers l'intérieur dans une direction vers la colonne de direction.
